# EUROPÄISCHE PATENTSCHRIFT

(11) **EP 0 616 145 B1**
(45) Veröffentlichungstag und Bekanntmachung des Hinweises auf die Patenterteilung: **16.07.1997**
(21) Anmeldenummer: 94103140.3
(22) Anmeldetag: 03.03.1994
(51) Int. Cl.: F16F 1/38, F16F 13/00

(54) **Elastische Lagerbuchse**
Elastic bearing sleeve
Manchon de support élastique

(30) Priorität: 10.03.1993 DE 4307559
(43) Veröffentlichungstag der Anmeldung: 21.09.1994
(73) Patentinhaber: METZELER GIMETALL AG, D-80992 München (DE)
(72) Erfinder: Hofmann, Manfred, D-65597 Hünfelden (DE); Salz, Robert, D-53577 Neustadt (DE)
(74) Vertreter: Preissner, Nicolaus, Dipl.-Ing.

(56) Entgegenhaltungen:
- EP-A- 0 344 405
- EP-A- 0 460 278
- EP-A- 0 543 082
- DE-A- 2 755 117
- DE-A- 3 722 079
- DE-A- 3 833 451
- DE-A- 4 216 648
- PATENT ABSTRACTS OF JAPAN vol. 18, no. 6 (M-1537) 7. Januar 1994 & JP-A-05 248 487 (N O K MEGURASUTEITSUKU KK) 24. September 1993

## Beschreibung

Die Erfindung betrifft eine elastische Lagerbuchse mit einer äußeren, zylindrischen Lagerhülse und einem Innenteil, das im Innern eines sich horizontal erstreckenden Elastomerkörpers gehalten ist, wobei der Elastomerkörper im Querschnitt angenähert topfförmig ausgebildete, elastische Anschläge aufweist, die an der äußeren Lagerhülse festgelegt sind und bis in die Nähe des Innenteils ragen, wobei die Anschläge mit der Lagerhülse flüssigkeitsgefüllte, kreisabschnittförmige Kammern als Federungsräume einschließen, die über Kanäle miteinander verbunden sind, und wobei die Anschläge über jeweils einen Spalt vom Elastomerkörper beabstandet sind.

Eine derartige elastische Lagerbuchse ist aus der DE-A-37 22 709 bekannt.Hierbei ist in einer äußeren zylinderförmigen Lagerhülse ein ebenfalls zylinderförmiges Innenteil koaxial angeordnet, das von einem zwischen der Innenhülse un der Außenhülse angeordneten Elastomerkörper aufgenommen wird. Der Elastomerkörper weist ringförmige in Radialrichtung verlaufende elastische Anschläge auf, die an der Außenhülse festgelegt sind. Hierbei begrenzen der Elastomerkörper und die ringförmigen Anschläge mit der Außenhülse kreisabschnittförmige Kammern, die mit einer Hydraulikflüssigkeit gefüllt sind und über Kanäle miteinander in Verbindung stehen. In den Elastomerkörper sind im Bereich der Anschläge in Längsrichtung des Elastomerkörpers verlaufende Spalte eingebracht. Weiterhin weist der Elastomerkörper in Radialrichtung abragende Flügel auf, die in weiteren Flüssigkeitskammern angeordnet sind.

Aus der DE-A-38 33 451 ist eine elastische Lagerbuchse bekannt, bei der ein Innenteil mittels eines Elastomerkörpers im Innern einer zylinderförmigen Außenhülse aufgenommen ist. Der Elastomerkörper bildet mit der Außenhülse flüssigkeitsgefüllte Kammern, die über Kanäle miteinander in Verbindung stehen.

Der Erfindung liegt die Aufgabe zugrunde, eine elastische Lagerbuchse zu schaffen, bei der in einfacher Weise die Vorspannung variiert werden kann.

Zur Lösung dieser Aufgabe ist bei einer Lagerbuchse der eingangs genannten Art erfindungsgemäß vorgesehen, daß in die Spalte in Längsrichtung keilförmig zulaufende Kappen aus Kunststoff zur Vorspannung der Buchse eingesetzt sind. Hierdurch kann in einfacher Weise und kostengünstig die Vorspannung der elastischen Lagerbuchse variiert werden.

Vorteilhafte Ausgestaltungen der Erfindung ergeben sich aus den Unteransprüchen.

Vorteilhaft weisen die topfförmigen Anschläge ein innenliegendes, angenähert quaderförmig ausgebildetes und mit Abstand vor der Lagerhülse endendes Anschlagpolster auf. Ein derartiges Anschlagpolster dient zur Begrenzung des Gesamtwegs.

In weiterer Ausgestaltung verlaufen die Kanäle mittig zur Buchsenlängsachse als Umfangskanäle am Innenumfang der Lagerhülse.

Vorteilhaft ist das Innenteil mit angenähert rechteckigem Querschnitt und einer zentralen Bohrung ausgebildet.

Bei einer besonders vorteilhaften Ausgestaltung erweitern sich die Spalte zwischen der Unterseite der topfförmigen Anschläge und dem das Innenteil tragenden Elastomerkörpers in Querrichtung nach außen keilförmig. Hierdurch wird erst bei größeren Schwingungsamplituden der sich horizontal erstreckende und das Innenteil aufnehmende Elastomerkörper mit den topfförmigen Anschlägen in Berührung kommen und dann bei Zusammenpressen dieser Anschläge durch die verzögernd verdrängte Flüssigkeit eine Dämpfung erfahren. Somit werden Schwingungen kleiner Amplitude nicht gedämpft, soweit sie den durch die Spalte gegebenen Freiweg nicht überschreiten.

Bei einer weiteren vorteilhaften Ausgestaltung weist das Innenteil auf Ober- und/oder Unterseite in Längsrichtung verlaufende schwalbenschwanzförmige Nuten auf, in die den Spalt zum Anschlag hin überbrückende Anschlagkörper zur Erzeugung einer Vorspannung der Buchse eingesetzt sind.

Nachfolgend wird die Erfindung anhand von Ausführungsbeispielen näher erläutert, die in schematischer Weise in der Zeichnung dargestellt sind. Dabei zeigen:
- Figur 1: einen mittigen Querschnitt durch eine solche Lagerbuchse,
- Figur 2: einen Längsschnitt durch die Buchse entsprechend der Schnittlinie II-II nach Figur 1,
- Figur 3: einen Horizontalschnitt durch die Buchse entsprechend der Schnittlinie III-III nach Figur 1,
- Figur 4: einen Längsschnitt durch die Lagerbuchse mit keilförmigen Vorspannelementen und
- Figur 5: einen Querschnitt durch die Lagerbuchse mit in schwalbenschwanzförmigen Halterungen eingesetzten Vorspannelementen.

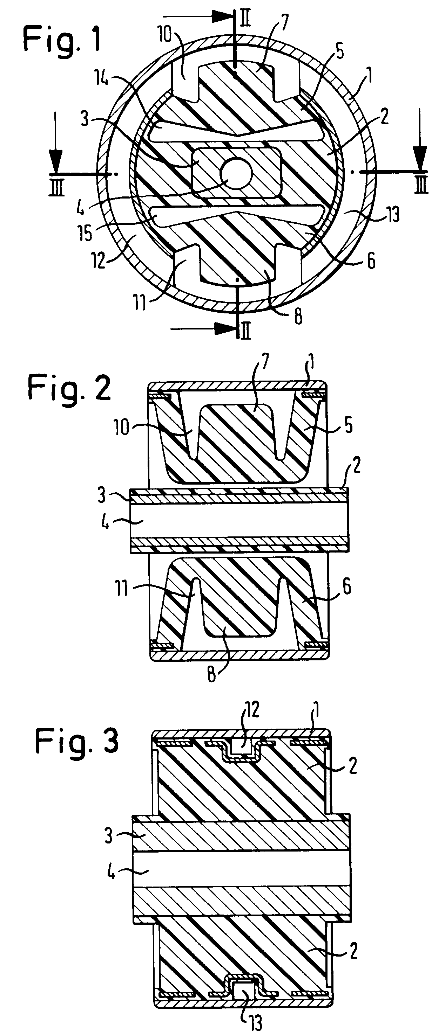

Wie man aus den Figuren 1 bis 3 ersieht, weist die Lagerbuchse eine zylindrische Lagerhülse 1 auf, in der von einem sich horizontal erstreckenden Elastomerkörper 2 eine angenähert rechteckig ausgebildetes Innenteil 3 aus Kunststoff oder Metall mit einer zentralen Bohrung 4 gehalten ist.

In den freien Bereichen ober- und unterhalb dieses Elastomerkörpers 2 sind nunmehr an der äußeren Lagerhülse 1 festgelegte und bis in die Nähe des Innenteiles 3 ragende, angenähert topfförmig ausgebildete Anschläge 5 und 6 aus einem elastomeren Material angeordnet, die ein innenliegendes, angenähert quaderförmig ausgebildetes und mit Abstand vor der Lagerhülse 1 endendes Anschlagpolster 7 bzw. 8 aufweisen.

Durch die Gestaltung der Anschläge 5 und 6 werden zwischen diesen und der Lagerhülse 1 flüssigkeitsgefüllte Kammern 10 und 11 eingeschlossen, die über am Innenumfang der Lagerhülse 1 verlaufenden Kanäle 12 und 13 miteinander in Verbindung stehen.

Wie man aus Figur 1 weiter ersieht, sind die Spalte 14 und 15 zwischen dem Elastomerkörper 2 und den Anschlägen 5 und 6 in Querrichtung nach außen keilförmig erweitert, um damit ein progressiveres Verhalten der Anschläge zu gewährleisten.

Wenn nun eine Schwingung mit größerer Amplitude in die Lagerbuchse eingeleitet wird, die in einer Lageverschiebung von Innenteil 3 und Außenteil 1 zueinander resultieren, wird das Innenteil 3 nach einem gewissen Freiweg mit den nach innen ragenden Bereichen der topfförmigen Anschläge 5 oder 6 in Berührung kommen und nach einer weiteren Vertikalverschiebung Flüssigkeit aus der Kammer 10 oder 11 - je nach Verschiebungsrichtung - über die Kanäle 12 und 13 in die jeweils andere Kammer 11 bzw. 10 drücken und damit eine Dämpfung der aufgetretenen Schwingungen bewirken. Bei sehr großen Anschlägen werden diese dann durch Anschlagen der Anschlagpolster 7 bzw. 8 an der Lagerhülse (1) begrenzt.

Wie man aus der vorstehenden Erläuterung und der Zeichnung ersieht, werden demgegenüber Schwingungen kleiner Amplitude nicht gedämpft, soweit sie den durch die Spalte 14 und 15 gegebenen Freiweg nicht überschreiten.

Auch bei derart ausgebildeten Lagerbuchsen ist die Möglichkeit gegeben, diese Buchsen mit Vorspannung einzubauen.

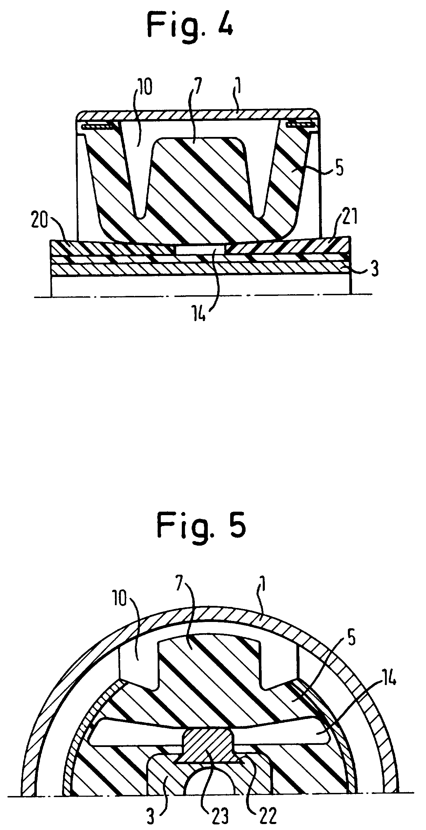

Wie man dazu aus Figur 4 ersieht, können in den Spalt 14 zwischen dem topfförmigen Anschlag 5 und der Innenbuchse 3 keilförmig zulaufende Kappen 20 und 21 aus Kunststoff eingepreßt werden und damit eine entsprechende Vorspannung bewirken.

Eine andere Möglichkeit des Aufbringens einer Vorspannung ist in dem Querschnitt nach Figur 5 dargestellt. Hierzu ist auf der Oberseite des Innenteiles 3 eine schwalbenschwanzförmige Nut 22 in Längsrichtung eingeschnitten, in die ein entsprechend geformter Anschlagkörper 23 eingesetzt ist, der auch hier den Spalt 14 zwischen Innenteil 3 und topfförmigem Anschlag 5 überbrückt und gegebenenfalls entsprechend vergrößert.

Beide Vorspannungsmaßnahmen entsprechen den Figuren 4 und 5, können aber auch in gleicher Weise auf der Unterseite des Innenteiles 3 vorgenommen werden.

Ingesamt ergibt sich also eine Lagerbuchse mit hydraulischen Anschlägen, bei der Schwingungen großer Amplitude durch Flüssigkeitsverschiebung gedämpft und kleine Amplituden hoher Frequenz innerhalb eines vorgebbaren Freiweges nicht gedämpft werden.

## Patentansprüche

1. Elastische Lagerbuchse mit einer äußeren, zylindrischen Lagerhülse (1) und einem Innenteil (2), das im Innern eines sich horizontal erstreckenden Elastomerkörpers (2) gehalten ist, wobei der Elastomerkörper (2) im Querschnitt angenähert topfförmig ausgebildete, elastische Anschläge (5, 6) aufweist, die an der äußeren Lagerhülse (1) festgelegt sind und bis in die Nähe des Innenteils (2) ragen, wobei die Anschläge (5, 6) mit der Lagerhülse (1) flüssigkeitsgefüllte, kreisabschnittförmige Kammern (10, 11) als Federungsräume einschließen, die über Kanäle (12, 13) miteinander verbunden sind, und wobei die Anschläge (5, 6) über jeweils einen Spalt vom Elastomerkörper (2) beabstandet sind, dadurch gekennzeichnet, daß in die Spalte (14, 15) in Längsrichtung keilförmig zulaufende Kappen (20, 21) aus Kunststoff zur Vorspannung der Buchse eingesetzt sind.

2. Elastische Lagerbuchse nach Anspruch 1, dadurch gekennzeichnet, daß die topfförmigen Anschläge (5, 6) ein innenliegendes, angenähert quaderförmig ausgebildetes und mit Abstand von der Lagerhülse (1) endendes Anschlagpolster (7, 8) aufweisen.

3. Elastische Lagerbuchse nach Anspruch 1 oder 2, dadurch gekennzeichnet, daß die Kanäle (12, 13) mittig zur Buchsenlängsachse als Umfangskanäle am Innenumfang der Lagerhülse (1) verlaufen.

4. Elastische Lagerbuchse nach einem der Ansprüche 1 bis 3, dadurch gekennzeichnet, daß das Innenteil (3) mit angenähert rechteckigem Querschnitt und einer zentralen Bohrung (4) ausgebildet ist.

5. Elastische Lagerbuchse nach einem der Ansprüche 1 bis 4, dadurch gekennzeichnet, daß sich die Spalte (14, 15) zwischen der Unterseite der topfförmigen Anschläge (5, 6) und dem das Innenteil (3) tragenden Elastomerkörper (2) in Querrichtung nach außen keilförmig erweitert.

6. Elastische Lagerbuchse nach einem der Ansprüche 1 bis 5, dadurch gekennzeichnet, daß das Innenteil (3) auf Ober- und/oder Unterseite in Längsrichtung verlaufende schwalbenschwanzförmige Nuten (22) aufweist, in die den Spalt (14, 15) zum Anschlag (5, 6) hin überbrückende Anschlagkörper (23) zur Erzeugung einer Vorspannung der Buchse eingesetzt sind.

## Claims

1. An elastic mounting bush including an outer, cylindrical mounting sleeve (1) and an internal part (3) held in the interior of a horizontally extending elastomeric body (2), said elastomeric body (2) comprising elastic stops (5, 6) configured approximately pot-shaped cross-sectionally, defined on said outer mounting sleeve (1) and extending up to the vicinity of said internal part (3), said stops (5, 6) enclosing with said mounting sleeve (1) circular section shaped chambers (10, 11) filled with fluid as spring suspension cavities interconnected via passageways (12, 13), each of said stops (5, 6) being spaced away from said elastomeric body (2) by a gap, characterized in that longitudinally wedge-shaped caps (20, 21) of a plastics material are inserted in said gaps (14, 15) for preloading said bush.

2. The elastic mounting bush as set forth in claim 1, characterized in that said pot-shaped stops (5, 6) comprise an internal stop cushion (7, 8) configured approximately cuboidal and ending spaced away upstream of said mounting sleeve (1).

3. The elastic mounting bush as set forth in claim 1 or 2, characterized in that said said passageways (12, 13) are oriented centrally to the longitudinal axis of said bush as circumferential passageways on the inner circumference of said mounting sleeve (1).

4. The elastic mounting bush as set forth in any of said claims 1 to 3, characterized in that said internal part (3) is configured with an approximately rectangular cross-section and with a centerbore (4).

5. The elastic mounting bush as set forth in any of said claims 1 to 4, characterized in that said gaps (14, 15) are flared transversely outwardly between the underside of said pot-shaped stops (5, 6) and said elastomeric body (2) carrying said internal part (3).

6. The elastic mounting bush as set forth in any of said claims 1 to 5, characterized in that said internal part (3) comprises dovetail-shaped grooves (22) oriented longitudinally on the upper and/or lower side into which stop bodies (23) bridging said gap (14, 15) to said stop (5, 6) are inserted to produce preloading of said bush.

## Revendications

1. Manchon de support élastique, comprenant une douille de support cylindrique extérieure (1) et une partie intérieure (2), laquelle est maintenue à l'intérieur d'un corps en élastomère (2) qui s'étend horizontalement, le corps en élastomère (2) comportant des butées élastiques (5, 6) réalisées en section transversale approximativement en forme de cloche, qui sont fixées sur la douille de support extérieure (1) et s'étendent jusqu'au voisinage de la partie intérieure (2), les butées (5, 6) enfermant avec la douille de support (1) des chambres (10, 11) remplies de liquide et en forme de segment de cercle, en tant que chambres de suspension, lesquelles sont reliées les unes aux autres via des canaux (12, 13), et les butées (5, 6) sont écartées du corps en élastomère (2) par l'intermédiaire d'une fente respective, caractérisé en ce que des capuchons (20, 21) en matière plastique, qui convergent sous forme conique, sont mis en place dans les fentes (14, 15) en direction longitudinale, pour la précontrainte du manchon.

2. Manchon de support élastique selon la revendication 1, caractérisé en ce que les butées (5, 6) en forme de cloche comportent un rembourrage de butée intérieur (7, 8) réalisé approximativement sous forme carrée et se terminant à distance de la douille de support (1).

3. Manchon de support élastique selon l'une ou l'autre des revendications 1 et 2, caractérisé en ce que les canaux (12, 13) s'étendent au centre vers l'axe longitudinal du manchon sous forme de canaux périphériques à la périphérie intérieure de la douille de support (1).

4. Manchon de support élastique selon l'une des revendications 1 à 3, caractérisé en ce que la partie intérieure (3) est réalisée avec une section transversale approximativement rectangulaire et avec un perçage central (4).

5. Manchon de support élastique selon l'une quelconque des revendications 1 à 4, caractérisé en ce que la fente (14, 15) entre la face inférieure des butées en forme de cloche (5, 6) et le corps en élastomère (2) qui porte la partie intérieure (3) va en s'élargissant en direction transversale vers l'extérieur.

6. Manchon de support élastique selon l'une quelconque des revendications 1 à 5, caractérisé en ce que la partie intérieure (3) comporte à la face supérieure et/ou à la face inférieure des gorges (22) en forme de queue d'aronde qui s'étendent en direction longitudinale, dans lesquelles sont mis en place des corps de butée (23) qui comblent la fente (14, 15) jusqu'à la butée (5, 6) pour produire une précontrainte du manchon.
